(19) Europäisches Patentamt
European Patent Office
Office européen des brevets

(11) EP 0 531 939 B1

## (12) EUROPEAN PATENT SPECIFICATION

(45) Date of publication and mention
of the grant of the patent:
**29.12.1999 Bulletin 1999/52**

(51) Int Cl.⁶: $G09F\ 13/16$, $G09F\ 13/04$

(21) Application number: **92115346.6**

(22) Date of filing: **08.09.1992**

(54) **Surface light source device**

Oberflächenbeleuchtung

Surface lumineuse

(84) Designated Contracting States:
**DE FR GB IT NL**

(30) Priority: **09.09.1991 JP 8035791 U**
      **28.11.1991 JP 10534291 U**
      **29.07.1992 JP 5842192 U**

(43) Date of publication of application:
**17.03.1993 Bulletin 1993/11**

(73) Proprietor: **ENPLAS CORPORATION**
      **Kawaguchi-shi Saitama-ken (JP)**

(72) Inventors:
 • **Yokoyama,Kazuaki**
   **Urawa-shi, Saitama-ken (JP)**
 • **Ishikawa,Tsuyoshi**
   **Nerima-ku, Tokyo-to (JP)**

(74) Representative:
**Prechtel, Jörg, Dipl.-Phys. Dr. et al**
**Patentanwälte**
**H. Weickmann, Dr. K. Fincke**
**F.A. Weickmann, B. Huber**
**Dr. H. Liska, Dr. J. Prechtel, Dr. B. Böhm**
**Postfach 86 08 20**
**81635 München (DE)**

(56) References cited:
**EP-A- 0 392 863      EP-A- 0 395 344**
**FR-A- 2 576 441      GB-A- 315 743**
**GB-A- 325 957**

## Description

<u>Background of the Invention</u>

a) Field of the invention:

The present invention relates to a surface light source device which is to be used as a back light for liquid crystal display units, and more specifically to a surface light source device which uses a transparent panel member or a reflecting panel member.

b) Description of the prior art:

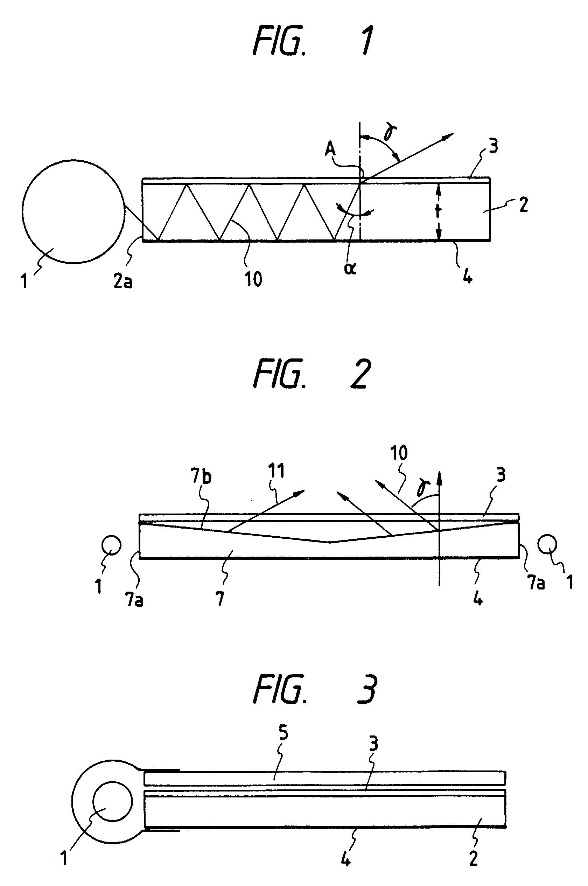

The conventional surface light source device which uses a transparent panel has a composition as illustrated in Fig. 1. In this drawing, the reference numeral 1 represents a light source, the reference numeral 2 designates a transparent panel, the reference numeral 3 denotes a diffusing panel and the reference numeral 4 represents a reflecting surface. The light source 1 used in this surface light source device is a linear light source which is, for example, a cold cathod ray tube and extends in the direction perpendicular to the paper surface. The transparent panel 2 is made of a glass material or a transparent plastic material. As a material for the transparent panel 1, it is general to select a plastic material such as acrylic resin which is light in weight thereof and available at a low cost. The transparent panel 2 has a form of a plane parallel plate which has thickness of t and a rectangular or square surface. A light beam emitted from the linear light source 1 enters through an end surface of incidence 2a into the transparent panel 2 and travels through the transparent panel 2 as represented by a ray 10 in Fig. 1. During this travel, portions of the light beam emerge from the transparent panel 2 (upward in Fig. 1) and pass through the diffusing panel 3 to produce diffused rays. The surface light source device produces the diffused rays which are diverging from various points on the surface of the diffusing panel (the upper surface shown in Fig. 1) as described above. The ray 10 shown in Fig. 1 is diverged from a point A on the diffusing panel 3. In a case where the diffusing panel 3 should not be used, a ray which travels in a direction having an angle of $\gamma$ indicated by an arrow has the highest brightness. The angle $\gamma$ has a value which is different dependently on refractive indices of materials selected for the transparent panel 2. Experiments effected by selecting an acrylic resin having a refractive index of 1.49 indicated results that the angle $\gamma$ has a value of approximately 75°. When the diffusing panel 3 is placed over the transparent panel 2 so that rays having passed through the diffusing panel 3 are diffused, deflection of the rays is corrected a little due to the diffusion of the rays, but brightness in the direction perpendicular to the transparent panel is not enhanced so remarkably. When a liquid crystal display panel, for example, is illuminated by using the surface light source device which uses the diffusing panel 3 placed over the transparent panel 2, brightness of the diffused rays is low in a direction for observation, i.e., in a direction having the angle $\gamma = 0°$, whereas brightness of the diffused rays is the highest in an oblique direction having an angle $\gamma \fallingdotseq 75°$ which is deviated from the direction for observation. Accordingly, an observer of the liquid crystal display panel is undesirably obliged to observe an image which is relatively dark.

As another conventional example of the surface light source device which uses the transparent panel, there is also known the surface light source device illustrated in Fig. 2. In this conventional example, two linear light sources 1, 1 are disposed beside both end surfaces of a transparent panel 5. The two light sources 1, 1 are adopted for obtaining a surface light source device which can provide diffused rays having higher brightness.

Further, the transparent panel 5 of the surface light source device illustrated in Fig. 2 has a thinned central portion (the portion farthest from the light sources disposed on the right and left sides) and a top surface 5b which is inclined.

The surface light source device illustrated in Fig. 2 is configured so that light beams emitted from the right side and left side light sources 1, 1 enter through end surfaces of incidence 7a, 7a of the transparent panel 7, and emerge out of a diffusing panel 3 so as to produce diffused rays. In case of the surface light source device which uses the inclined top surface 7b, rays emerging from the transparent panel 7, for example rays 10 and 11, have the highest brightness at an inclination angle which is a little smaller, or the angle $\gamma$ has a value of approximately 60°. However, the surface light source device illustrated in Fig. 2 cannot provide the diffused rays which have sufficient brightness in the direction for observation and obliges to observe relatively dark images.

In addition, there are known transparent panels each of which has thickness progressively thinned along a curve from an end surface of incidence as well as those each of which has thickness progressively thinned along curves from a plurality of end surfaces of incidence. There are also known transparent panels each of which is combined with a plurality of light sources and has uniform thickness.

The EP-A-0 392 863 shows a surface light source device according to the preamble of claims 1, 9 and 13. The front surface of the transparent panel is flat. No additional transparent sheet is provided.

The EP-A-0 395 344 shows a surface light source device, wherein the lower surface of a dark portion removing sheet or diffusing sheet carries a multi-prism sheet.

The present invention provides a surface light source device according to the features of claims 1, 11 and 15.

## Summary of the Invention

The surface light source device according to the present invention enhances brightness in a direction perpendicular to the diffusing panel.

The transparent sheet may have a form which has a large number of very small conical or pyramidal protrusions formed on one surface. Further, tips or vertices of the conical or pyramidal protrusions may be rounded.

Formed on one surface of the transparent sheet are rows of the protrusions which have the saw-tooth-like sectional shape.

In a particular case where the surface light source device according to the present invention is to be used as a back light for a liquid crystal display panel, it is preferable, for preventing stripe patterns from appearing on a display panel of the liquid crystal display unit, to configure the transparent sheet so that the rows of the top lines of the protrusions are oblique relative to bus lines or sides of a frame of the display panel.

Further, in the case where the transparent sheet has a large number of the conical or pyramidal protrusions, it is desirable that rows of the protrusions are oblique relative to the bus lines or the sides of the frame of the liquid crystal display panel as in the case described above.

## Brief Description of the Drawings

Fig. 1 shows a sectional view illustrating a composition of the conventional surface light source device;

Fig. 2 shows a sectional view illustrating a composition of a different type of the conventional surface light source device;

Fig. 3 shows a sectional view of a surface light source device;

Fig. 4 through Fig. 8 show sectional views illustrating compositions of embodiments of the surface light source device according to the present invention;

Fig. 9 shows a perspective view of a transparent panel which is tinned at a central portion thereof for use in a surface light source device equipped with four light sources disposed besides the four sides of the transparent panel;

Fig. 10 shows a schematic sectional view illustrating an overall configuration of a combination liquid crystal display panel and the surface light source device according to the present invention used as a back light for the liquid crystal display panel;

Fig. 11 shows a plan view illustrating the transparent sheet which has oblique rows of the top lines of protrusions which has a saw-tooth-like sectional shape;

Fig. 12 shows a perspective view of the transparent sheet which has oblique rows of vertices of conical protrusions;

Fig. 13 shows a sectional view illustrating an example of a surface light source device wherein the transparent panel shown in Fig. 10 is utilized in a surface light source device of the type using a reflecting panel; and

Fig. 14 shows a sectional view of a part of another transparent sheet.

## Detailed Description of the Preferred Embodiments

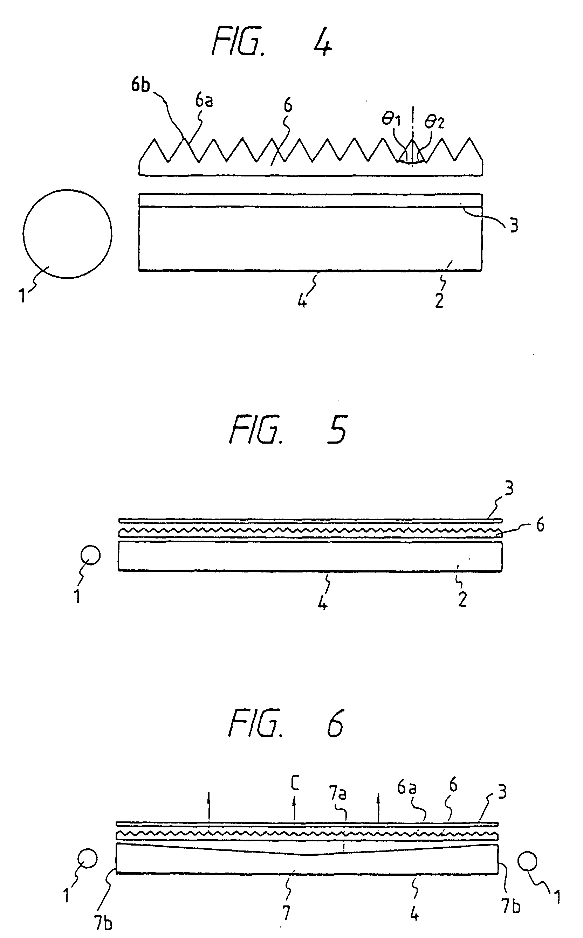

A surface light source device is illustrated in Fig. 3, wherein the reference numeral 1 represents a light source, the reference numeral 2 designates a transparent panel, the reference numeral denotes a diffusing panel and the reference numeral 4 represents a reflecting panel. This device has a composition which is substantially the same as that of the conventional surface light source device illustrated in Fig. 1. The reference numeral 5 represents another diffusing panel which is adopted or enhancing brightness or luminance in the direction for observation (the direction prependicular to the diffusing panels shown in Fig. 3). In other words, the diffusing panel 5 serves for enhancing brightness in the direction for observation by further diffusing rays (or controlling directions of rays) travelling in the direction at the angle of $\gamma$ shown in Fig. 1 so that a portion of the ray is directed upward (in the direction for observation).

Experiments which were effected for comparing the conventional surface light source device shown in Fig. 1 with the device shown in Fig. 3 indicated results that brightness in the direction perpendicular to the diffusing panel 3 is approximately 25% higher in case of the embodiment of Fig. 3.

Fig. 4 shows a first embodiment of the present invention, wherein the diffusing panel 5 used in the device of Fig. 3 is replaced with a transparent sheet 6 having a surface on which protrusions 6a having a sectional shape of saw teeth are formed in rows nearly parallel with one another are formed.

In case of this first embodiment, rays which have emerged from the transparent panel 2 and passed through the diffusing panel 3 become diffused rays, which are refracted so as to be controlled in a direction perpendicular to the diffusing panel 3 by the surface having the saw-tooth-like protrusion 6a formed on the transparent sheet so as to enhance brightness in the direction perpendicular to the diffusing panel 3.

Experiments indicated that this first embodiment enhanced brightness approximately 50% in the direction of $\gamma = 0°$ as compared with the brightness available with the surface light source device illustrated in Fig. 1.

In the first embodiment described above, it is possible to omit the diffusing panel 3 by designing the surface of the transparent sheet 6 as a coarse surface though the brightness in the direction for observation is not enhanced so much in this case.

In the first embodiment, relationship between $\theta_1$ and $\theta_2$ shown in Fig. 4 may be $\theta_1 = \theta_2$, $\theta_1 < \theta_2$ or $\theta_1 > \theta_2$ for selecting a shape for the saw-tooth-like protrusions.

When $\theta_1$ is largely different from $\theta_2$, however, the saw-teeth-like protrusions will produce an undesirable influence on observation of images in a case of application where the first embodiment is used as a surface light source for illumination. Therefore, it is desirable that $\theta_1$ is equal or nearly equal to $\theta_2$. A transparent panel which has the saw-teeth-like protrusions designed for $\theta_1 = \theta_2$ was used for the experiments which were effected for comparing the conventional surface light source device with the second embodiment of the present invention as described above. The conventional example using the transparent panel made of acrylic resion provided the angle of $\alpha$ which was experimentally confirmed as 74.6° as described above. It is therefore considered that the angle $\alpha$ of the ray 10 shown in Fig. 1 is approximately 40°. Accordingly, it is considered that rays which travel through the transparent panel like the ray 10 shown in Fig. 1 have the maximum intensity. So far as the angle a shown in Fig. 1 is kept unchanged, the angle $\gamma$ has a value which is smaller as the transparent panel 2 has a smaller refractive index. Consequently, the angle $\gamma$ has a smaller value and the brightness in the direction perpendicular to the diffusing panel 3 is enhanced as the transparent panel has a smaller refractive index the embodiment described above. On an assumption of $\alpha = 40°$ it is possible to obtain $\gamma = 68.8°$ as understood from the formula shown below by using polymethylpentene (n = 1.45) as a material for the transparent panel:

$$\sin \gamma = n \sin \alpha$$

The angle $\gamma$ was approximately 69° in experiments effected by using a surface light source device which had the composition shown in Fig. 1 and used a transparent panel made of polymethylpentene.

In the embodiment described above, usable as materials for the transparent panel are not only acrylic resin and polymethylpentene but also other materials so far as these materials have high transparency and heat resistance. It is preferable to select, among these materials, one which has a low refractive index as a material for the transparent panel.

In the first embodiment described above, the transparent sheet is not limited to the one which has the protrusions which have the saw-tooth-like sectional shape and formed in rows on one surface thereof. For example, the transparent panel may have a large number of minute prism-like protrusions formed on one surface thereof. Further, conical shapes or pyramidal shapes may be selected in place of the prism-like shape.

Fig. 5 shows the second embodiment of the surface light source device according to the present invention wherein a transparent sheet 6 which has protrusions 6a having saw-tooth-like sectional shape are formed on one surface thereof is disposed in the vicinity of a surface (the upper surface in Fig. 5) of the transparent panel and a diffusing panel 3 is disposed outside the transparent sheet 6.

The second embodiment of the present invention has an effect which is similar to that of the first embodiment of the present invention.

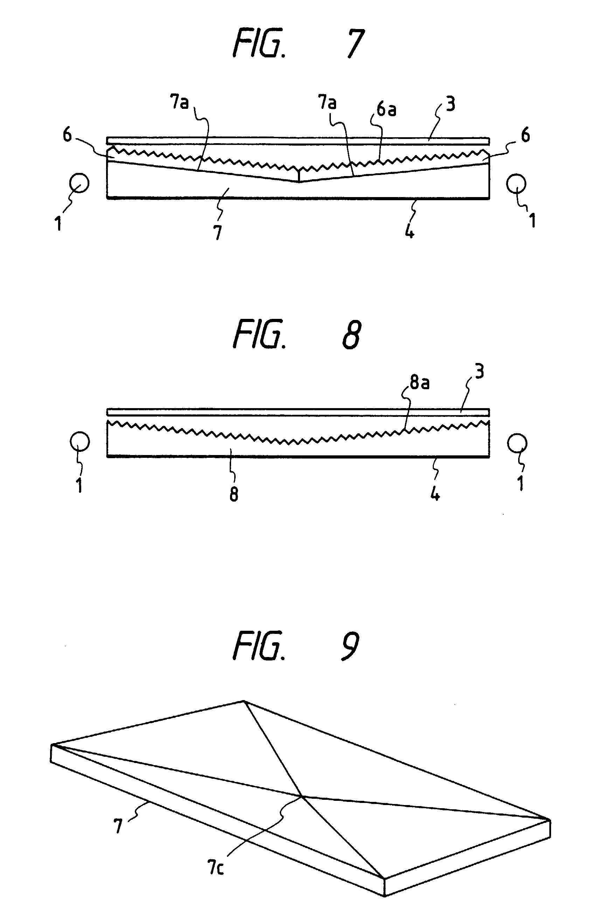

Fig. 6 illustrates the third embodiment of the surface light source device according to the present invention wherein the concept of the present invention is applied to the conventional surface light source device shown in Fig. 2 so that brightness is enhanced in the direction perpendicular to the diffusing panel. Speaking concretely of the third embodiment, light sources 1, 1 are disposed on both sides of a transparent panel 7 which has a thinned central portion, and a transparent sheet 6 which has protrusions 6a having saw-tooth-like sectional shape formed on one surface thereof and a diffusing panel 3 are disposed on the side of the surface 7a of the transparent panel as illustrated in Fig. 7.

In the third embodiment, light beams emitted from the light sources 1, 1 and entering into the transparent panel 7 are refracted a little upward by the surface 7a which is inclined relative to the bottom surface of the transparent panel 7, refracted further upward by the protrusions formed on the surface having the saw-tooth-like protrusions 6a of the transparent sheet 6 and pass through the diffusing panel 3, thereby becoming diffused rays. Accordingly, luminance of the diffused rays is enhanced in the direction C perpendicular to the diffusing panel 3 so as to assure brightness sufficient for observation.

Fig. 7 illustrates the fourth embodiment of the surface light source device according to the present invention which consists of two light sources 1, 1, a transparent panel 7 having a thinned central portion, two transparent sheets 6, 6 which are disposed in contact with a surface 7a of the transparent panel 7 on which protrusions having saw-tooth-like sectional shape are formed, and a diffusing panel 3. Owing to this composition, the fifth embodiment has an effect which is similar to that of the third embodiment.

Fig. 8 illustrates the fifth embodiment of the surface light source device according to the present invention wherein a transparent panel 8 has a thinned central portion and an upper surface on which protrusions 8a having saw-tooth-like sectional shape are formed. Speaking detailedly, the fifth embodiment consists of the two light sources 1, 1, the transparent panel 8 having the surface on which the protrusions 8a having the saw-tooth-like sectional shape are formed and a diffusing panel 3. The fifth embodiment can provide an effect similar to those of the other embodiments without using a transparent sheet having the saw-tooth-like protrusions formed on one surface thereof.

Fig. 9 shows a transparent panel which has a thinned central portion and is to be used with the surface light source device equipped with four light sources disposed besides all the four sides of the transparent panel.

The concepts of the third through the fifth embodiments shown in Fig. 6 through Fig. 8 respectively are applicable also to the surface light source device using the transparent panel illustrated in Fig. 9.

Each of the first through the fourth embodiments described above adopts the transparent sheet which has protrusions having the saw-tooth-like sectional shape formed on one surface thereof. This transparent sheet has a sectional shape, for example, as the in Fig. 4. Rows of the top lines of the protrusions having the saw-tooth-like sectional shape (or lows of the vertices of the protrusions having prism-like sectional shape) are arranged in parallel with one another.

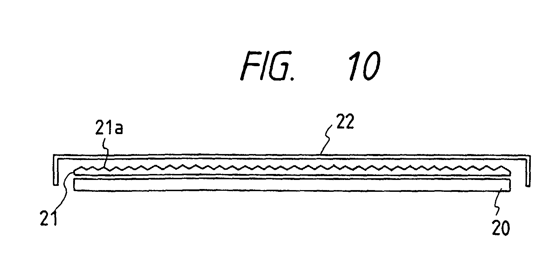

Fig. 10 is a schematic sectional view illustrating a combination of a liquid crystal display panel and the surface light source device according to the present invention which is used as a back light for the liquid crystal display panel. In Fig. 10, the reference numeral 20 represents the surface light source device, the reference numeral 21 designates the transparent sheet which has protrusions having the saw-tooth-like sectional shape formed on one surface thereof and the reference numeral 22 denotes the liquid crystal display panel.

When the surface light source device comprising the transparent sheet is used as a back light for the liquid crystal display panel as shown in Fig. 10, observation of images is hindered by stripe patterns which appear on the liquid crystal display panel.

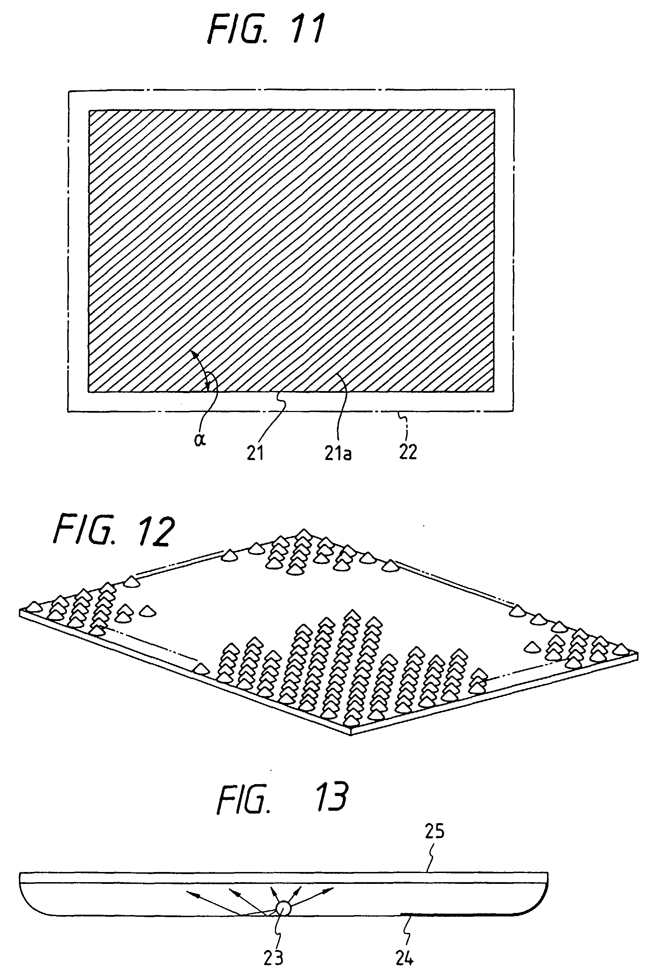

For correcting this defect, it is sufficient to configure the transparent sheet so that the rows of the top lines of the protrusions having the saw-tooth-like sectional shape are obliquely disposed as shown in Fig. 11. In such a case, however, an effect to efface the stripe patterns will not be obtained when the top lines 21a of the protrusions are disposed so as to form a small angle $\alpha$ relative to bus lines or sides of a frame of the liquid crystal display panel. The angle $\alpha$ should desirably be 45°. In place of the above transparent sheet (the transparent sheet as Fig. 11), the transparent sheet as shown in Fig. 12 may be used.

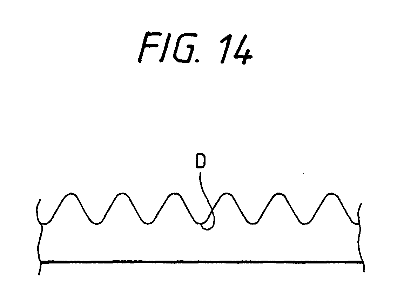

Fig. 13 illustrates a surface light source device which consists of a light source 23, a reflecting panel 24 and a diffusing panel 25, and is configured so that some of light beams emitted from the light source 23 travel directly to the diffusing panel 25, whereas the others of the light beams are reflected by the reflecting panel 24 and then directed toward the diffusing panel 25, whereby distribution of luminance is relatively uniform over the diffusing panel 25. In case of the surface light source device shown in Fig. 11 also, brightness can be enhanced in the direction perpendicular to the diffusing panel 25 by equipping the diffusing panel 25 with the transparent sheet which is adopted in the embodiments of the surface light source device according to the present invention. In the transparent sheet which is used in the present invention (for example, it is shown in Fig. 12, etc.), the portion between adjoining saw-teeth-like or conical (or pyramidal) protrusions can be curved as shown at D in Fig. 14. And also, in the surface light source device according to the present invention, it is possible to use plural transparent sheets in layers. In that case, it is preferable to incline the tansparent sheet the nearest to the liquid crystal display panel relative to bus line or sides of a frame of the liquid crystal display panel (for example, 45°). The other transparent sheets don't have to be oblique.

Important aspects of the described invention are as follows:

A surface light source device comprising at least one light source, a transparent panel, a diffusing panel and a reflecting surface. This surface light source device is configured so that brightness is enhanced in a direction perpendicular to the diffusing panel by disposing, on the side of a front surface of the transparent panel, a transparent sheet which has protrusions having a saw-tooth-like sectional shape formed on one surface thereof.

**Claims**

1. A surface light source device comprising: a transparent panel (2; 7) which is made of a transparent material and having a rectangular surface; at least one linearly extending light source (1) which is disposed in the vicinity of at least one side of said transparent panel (2; 7), the thickness of said transparent panel being uniform (2) or reduced (7) as portions of said transparent panel are farther from said light source (1); a diffusing panel (3) disposed in front of said transparent panel (2; 7), a reflecting surface (4) disposed on a rear surface of said transparent panel (2; 7), characterized by a transparent sheet (6) which is disposed in front of said transparent panel (2; 7) and which has protrusions (6a) having saw-tooth-like sectional shape formed in rows nearly parallel with one another on one surface thereof, wherein said rows of said protrusions (6a) on said transparent sheet (6) are arranged obliquely relative to the sides of said transparent panel (2; 7).

2. A surface light source device according to claim 1, wherein the diffusing panel (3) and the transparent sheet (6) are disposed with a space reserved therebetween.

3. A surface light source device according to claim 2, wherein said transparent sheet (6) is disposed between said transparent panel (2; 7) and said diffusing panel (3).

4. A surface light source device according to claim 2, wherein said light source (1) and another light source (1) are disposed beside two sides of said transparent panel (7) which are opposite to each other, and said transparent panel (7) has a thickness which is reduced as portions of said panel (7) are farther from said light source (1, 1) or a concave surface.

5. A surface light source device according to claim 2, wherein said transparent panel (2; 7) has a square surface area.

6. A surface light source device according to claim 5, wherein said light source (1) and three other light sources are disposed beside four sides of said transparent panel (7) and said transparent panel (7) has thickness which is reduced as portions of said transparent panel (7) are farther from said light source or a concave surface.

7. A surface light source device according to claim 5, wherein said light source (1) and another light source (1) are disposed beside two sides of said transparent panel (7) and said transparent panel (7) has thickness which is reduced as portions of said transparent panel (7) are farther from said light sources (1; 1) or a concave surface.

8. A surface light source device according to claim 7, wherein said transparent sheet (6) is disposed in contact with the surface of said transparent panel (7).

9. A surface light source device according to claims 2, 3, 4, 5, 6, 7 or 8 wherein said protrusions (6a) formed on said transparent sheet have curved tips.

10. A surface light source device according to claim 2, wherein said diffusing panel (3) is disposed between said transparent panel (2; 7) and said transparent sheet (6).

11. A surface light source device comprising: a transparent panel (2) which is made of a transparent material and having a rectangular shape and a uniform thickness; at least one linearly extending light source (1) disposed in the vicinity of at least one side of said transparent panel (2); a diffusing panel (3) disposed in front of said transparent panel (2), a reflecting surface (4) disposed on the rear side of said transparent panel (2), characterized by a transparent sheet (6) which is disposed in front of said transparent panel (2) and which has a large number of light diffusing protrusions formed on a surface thereof, the diffusing panel (3) and the transparent sheet (6) being disposed with a space reserved therebetween, said protrusions having predetermined curved tips, wherein said protrusions (6a) formed on said transparent sheet (6) are arranged in rows obliquely directed relative to the sides of said transparent panel (2).

12. A surface light source device according to claim 11, wherein said transparent sheet (6) is disposed between said transparent panel (2) and said diffusing panel (3).

13. A surface light source device according to claim 11 or 12, wherein said protrusions formed on said transparent panel are conical.

14. A surface light source device according to claim 11 or 12, wherein said protrusions formed on said transparent sheet are pyramidal.

15. A surface light source device as a backlight of a liquid crystal display unit comprising: a transparent panel (8) which is made of a transparent material and having a rectangular surface; at least one light source (1) disposed beside at least one side of said transparent panel (8); the thickness of said transparent panel (8) being uniform or reduced as portions of said transparent panel (8) are farther from said light source (1); a diffusing panel (3) disposed on the side of a front surface of said transparent panel (8); and a reflecting surface (4) disposed on the rear side of said transparent panel (8); characterized in that protrusions (8a) having a saw-tooth-like sectional shape are formed on the front surface of said transparent panel (8), said protrusions (8a) have curved tips with a predetermined curvature.

16. A surface light source device according to claim 1, wherein ridges (6b) of the plurality of said saw-tooth-like sectional shape protrusions (6a) form a plurality of substantially parallel rows on a surface of said transparent sheet (6).

17. A surface light source device according to claim 1, wherein said one surface of said transparent sheet (6) faces said diffusion panel (3).

**Patentansprüche**

1. Oberflächenbeleuchtungsvorrichtung, umfassend: eine transparente Platte (2; 7), die aus transparentem Material hergestellt ist und eine rechtwinklige Oberfläche aufweist; und zumindest eine linear verlaufende Lichtquelle (1), die in der Nähe zumindest einer Seite der transparenten Platte (2; 7) angeordnet ist, wobei die Dicke der transparenten Platte gleichmäßig (2) oder, mit zunehmendem Abstand von Abschnitten der transparenten Platte von der Lichtquelle (1), reduziert (7) ist; eine Diffusorplatte (3), die vor der transparenten Platte (2; 7) angeordnet ist, eine Reflektorfläche (4), die an einer Rückfläche der transparenten Platte (2; 7) angeordnet ist, gekennzeichnet durch eine transparente Schicht (6), die vor der transparenten Platte (2; 7) angeordnet ist und die Vorsprünge (6a) mit einer sägezahnartigen Querschnittsform aufweist, die in Reihen nahezu parallel zueinander an einer Oberfläche derselben ausgebildet sind, wobei die Reihen der Vorsprünge (6a) an der transparenten Schicht (6) relativ zu den Seiten der transparenten Platte (2; 7) schräg angeordnet sind.

2. Oberflächenbeleuchtungsvorrichtung nach Anspruch 1, wobei die Diffusorplatte (3) und die transparente Schicht (6) mit einem dazwischen verbleibenden Abstand angeordnet sind.

3. Oberflächenbeleuchtungsvorrichtung nach Anspruch 2, wobei die transparente Schicht (6) zwischen der transparenten Platte (2; 7) und der Diffusorplatte (3) angeordnet ist.

4. Oberflächenbeleuchtungsvorrichtung nach Anspruch 2, wobei die Lichtquelle (1) und eine weitere Lichtquelle (1) neben zwei einander entgegengesetzten Seiten der transparenten Platte (7) angeordnet sind, und wobei die transparente Platte (7) eine Dicke hat, die, mit zunehmendem Abstand von Abschnitten der Platte (7) von der Lichtquelle (1, 1), reduziert ist oder eine konkave Oberfläche aufweist.

5. Oberflächenbeleuchtungsvorrichtung nach Anspruch 2, wobei die transparente Platte (2; 7) einen quadratischen Oberflächenbereich aufweist.

6. Oberflächenbeleuchtungsvorrichtung nach Anspruch 5, wobei die Lichtquelle (1) und drei weitere Lichtquellen neben vier Seiten der transparenten Platte (7) angeordnet sind und wobei die transparente Platte (7) eine Dicke aufweist, die, mit zunehmendem Abstand von Abschnitten der transparenten Platte (6) von der Lichtquelle, reduziert ist oder eine konkave Oberfläche aufweist.

7. Oberflächenbeleuchtungsvorrichtung nach Anspruch 5, wobei die Lichtquelle (1) und eine weitere Lichtquelle (1) neben zwei Seiten der transparenten Platte (7) angeordnet sind und wobei die transparente Platte (7) eine Dicke aufweist, die, mit zunehmendem Abstand von Abschnitten der transparenten Platte (7) von den Lichtquellen (1, 1), reduziert ist oder eine konkave Oberfläche aufweist.

8. Oberflächenbeleuchtungsvorrichtung nach Anspruch 7, wobei die transparente Schicht (6) in Kontakt mit der Oberfläche der transparenten Platte (7) angeordnet ist.

9. Oberflächenbeleuchtungsvorrichtung nach einem der Ansprüche 2, 3, 4, 5, 6, 7 oder 8, wobei die an der transparenten Schicht ausgebildeten Vorsprünge (6a) gekrümmte Spitzen aufweisen.

10. Oberflächenbeleuchtungsvorrichtung nach Anspruch 2, wobei die Diffusorplatte (3) zwischen der transparenten Platte (2;7) der transparenten Schicht (6) angeordnet ist.

11. Oberflächenbeleuchtungsvorrichtung, umfassend: eine transparente Platte (2), die aus transparentem Material hergestellt ist und eine rechtwinklige Form und eine gleichmäßige Dicke hat; zumindest eine linear verlaufende Lichtquelle (1), die in der Nähe zumindest einer Seite der transparenten Platte (2) angeordnet ist; eine Diffusorplatte (3), die vor der transparenten Platte (2) angeordnet ist, eine Reflektorfläche (4), die an der Rückseite der transparenten Platte (2) angeordnet ist, gekennzeichnet durch eine transparente Schicht (6), die vor der transparenten Platte (2) angeordnet ist und an deren einer Oberfläche eine große Anzahl von Lichtstreuvorspüngen ausgebildet ist, wobei die Diffusorplatte (3) und die transparente Schicht (6) mit einem dazwischen belassenen Raum angeordnet sind, wobei die Vorsprünge vorbestimmte gekrümmte Spitzen aufweisen, wobei die an der transparenten Schicht (6) ausgebildeten Vorsprünge (6a) in Reihen angeordnet sind, die relativ zu den Seiten der transparenten Platte (2) schräg ausgerichtet sind.

12. Oberflächenbeleuchtungsvorrichtung nach Anspruch 11, wobei die transparente Schicht (6) zwischen der transparenten Platte (2) und der Diffusorplatte (3) angeordnet ist.

13. Oberflächenbeleuchtungsvorrichtung nach Anspruch 11 oder 12, wobei die an der transparenten Platte ausgebildeten Vorsprünge konisch sind.

14. Oberflächenbeleuchtungsvorrichtung nach Anspruch 11 oder 12, wobei die an der transparenten Schicht ausgebildeten Vorsprünge pyramidenartig sind.

15. Oberflächenbeleuchtungsvorrichtung als Hintergrundbeleuchtung einer Flüssigkristall-Anzeigeeinheit, umfassend: eine transparente Platte (8), die aus transparentem Material hergestellt ist und eine rechtwinklige Oberfläche aufweist; zumindest eine Lichtquelle (1), die neben zumindest einer Seite der transparenten Platte (8) angeordnet ist; wobei die Dicke der transparenten Platte (8) gleichmäßig ist oder, mit zunehmendem Abstand von Abschnitten der transparenten Platte (8) von der Lichtquelle (1), reduziert ist; eine Diffusorplatte (3), die seitens einer Vorderfläche der transparenten Platte (8) angeordnet ist; und eine Reflektorfläche (4), die an der Rückseite der transparenten Platte (8) angeordnet ist; dadurch gekennzeichnet, daß Vorsprünge (8a) mit einer sägezahnartigen Querschnittsform an der Vorderfläche der transparenten Platte (8) ausgebildet sind, wobei die Vorsprünge (8a) gekrümmte Spitzen mit einer vorbestimmten Krümmung aufweisen.

16. Oberflächenbeleuchtungsvorrichtung nach Anspruch 1, wobei Rücken (6b) der Mehrzahl der Vorsprünge (6a) mit sägezahnartiger Querschnittsform an einer Oberfläche der transparenten Schicht (6) eine Mehrzahl im wesentlichen paralleler Reihen bilden.

17. Oberflächenbeleuchtungsvorrichtung nach Anspruch 1, wobei die eine Oberfläche der transparenten Schicht (6) zu der Diffusorplatte (3) weist.

**Revendications**

1. Dispositif formant source lumineuse de surface comprenant: un panneau transparent (2 ; 7) qui est réalisé dans un matériau transparent et présente une surface rectangulaire; au moins une source lumineuse s'étendant de manière linéaire (1) qui est disposée à proximité d'au moins une face dudit panneau transparent (2; 7), l'épaisseur dudit panneau transparent étant uniforme (2) ou décroissante (7) au fur et à mesure que les.parties dudit panneau transparent s'éloignent de ladite source lumineuse (1) ; un panneau diffusant (3) disposé devant ledit panneau transparent (2 ; 7), une surface réfléchissante (4) disposée sur une surface arrière dudit panneau transparent (2 ; 7), caractérisé par une feuille transparente (6) qui est disposée devant ledit panneau transparent (2 ; 7) et qui a des saillies (6a) ayant une forme de section en dents de scie et disposées en rangées pratiquement parallèles les unes aux autres sur une de ses surfaces, dans lequel lesdites rangées desdites saillies (6a) sur ladite feuille transparente (6) sont disposées de manière oblique par rapport aux faces dudit panneau transparent (2 ;7)

2. Dispositif formant source lumineuse de surface selon la revendication 1, dans lequel le panneau diffusant (3) et la feuille transparente (6) sont disposés de manière à ce qu'un espace soit ménagé entre les deux.

3. Dispositif formant source lumineuse de surface selon la revendication 2, dans lequel ladite feuille transparente (6) est disposée entre ledit panneau transparent (2 ; 7) et ledit panneau diffusant (3).

4. Dispositif formant source lumineuse de surface selon la revendication 2, dans lequel ladite source lumineuse (1) et une autre source lumineuse (1) sont disposées à côté des deux faces dudit panneau transparent (7) opposées l'une à l'autre, et ledit panneau transparent (7) a une épaisseur décroissante au fur et à mesure que les parties dudit panneau transparent (7) s'éloignent de ladite source lumineuse (1, 1) ou une surface concave.

5. Dispositif formant source lumineuse de surface selon la revendication 2, dans lequel ledit panneau transparent (2 ; 7) présente une surface carrée.

6. Dispositif formant source lumineuse de surface selon la revendication 5, dans lequel ladite source lumineuse (1) et trois autres sources lumineuses sont disposées à côté de quatre faces dudit panneau transparent (7) et ledit panneau transparent (7) présente une épaisseur décroissante au fur et à mesure que les parties dudit panneau transparent (7) s'éloignent de ladite source lumineuse ou une surface concave.

7. Dispositif formant source lumineuse de surface selon la revendication 5, dans lequel ladite source lumineuse (1) et une autre source lumineuse (1) sont disposées à côté de deux faces dudit panneau transparent (7) et ledit panneau transparent (7) présente une épaisseur décroissante au fur et à mesure que les parties dudit panneau transparent (7) s'éloignent desdites sources lumineuses (1 ;1) ou une surface concave.

8. Dispositif formant source lumineuse de surface selon la revendication 7, dans lequel ladite feuille transparente (6) est disposée de manière à être en contact avec la surface dudit panneau transparent (7).

9. Dispositif formant source lumineuse de surface selon l'une quelconque des revendications 2, 3, 4, 5, 6, 7 ou 8, dans lequel lesdites saillies (6a) formées sur ladite feuille transparente présentent des pointes incurvées.

10. Dispositif formant source lumineuse de surface selon l'une quelconque des revendications 2, dans lequel ledit panneau diffusant (3) est disposé entre ledit panneau transparent (2 ; 7) et ladite feuille transparente (6).

11. Dispositif formant source lumineuse de surface

# EP 0 531 939 B1

comprenant : un panneau transparent (2) qui est réalisé dans un matériau transparent et présente une forme rectangulaire et une épaisseur uniforme ; au moins une source lumineuse s'étendant de manière linéaire (1) disposée à proximité d'au moins une face dudit panneau transparent (2) ; un panneau diffusant (3) disposé devant ledit panneau transparent (2), une surface réfléchissante (4) disposée sur la face arrière dudit panneau transparent (2), caractérisé par une feuille transparente (6) qui est disposée devant ledit panneau transparent (2) et qui présente un nombre important de saillies diffusant la lumière formées sur une de ses surfaces, le panneau diffusant (3) et la feuille transparente (6) étant disposés de manière à ce qu'un espace soit ménagé entre eux, lesdites saillies présentant des pointes incurvées prédéterminées, dans lequel lesdites saillies (6a) formées sur ladite feuille transparente (6) sont disposées en rangées dirigées obliquement par rapport aux faces dudit panneau transparent (2).

**12.** Dispositif formant source lumineuse de surface selon la revendication 11, dans lequel ladite feuille transparente (6) est disposée entre ledit panneau transparent (2) et ledit panneau diffusant (3).

**13.** Dispositif formant source lumineuse de surface selon la revendication 11 ou 12, dans lequel lesdites saillies formées sur ledit panneau transparent sont coniques.

**14.** Dispositif formant source lumineuse de surface selon la revendication 11 ou 12, dans lequel lesdites saillies formées sur ladite feuille transparente sont pyramidales.

**15.** Dispositif formant source lumineuse de surface utilisé en tant qu'élément de rétroéclairage d'une unité d'affichage à cristaux liquides comprenant : un panneau transparent (8) qui est réalisé dans un matériau transparent et présente une surface rectangulaire ; au moins une source lumineuse (1) disposée à côté d' au moins une face dudit panneau transparent (8); l'épaisseur dudit panneau transparent (8) étant uniforme ou décroissante au fur et à mesure que les parties dudit panneau transparent (8) s'éloignent de ladite source lumineuse (1); un panneau diffusant (3) disposé du côté d'une surface avant dudit panneau transparent (8); et une surface réfléchissante (4) disposée sur la face arrière dudit panneau transparent (8); caractérisé en ce que des saillies (8a) ayant une forme de section en dents de scie sont formées sur la surface avant dudit panneau transparent (8), lesdites saillies (8a) ayant des pointes incurvées avec une courbure prédéterminée.

**16.** Dispositif formant source lumineuse de surface selon la revendication 1, dans lequel les crêtes (6a) d'une pluralité desdites saillies à section en dents de scie (6a) forment une pluralité de rangées sensiblement parallèles sur une surface de ladite feuille transparente (6).

**17.** Dispositif formant source lumineuse de surface selon la revendication 1, dans lequel ladite une surface de ladite feuille transparente (6) fait face audit panneau diffusant (3).

FIG. 1

FIG. 2

FIG. 3

EP 0 531 939 B1

FIG. 4

FIG. 5

FIG. 6

11

FIG. 7

FIG. 8

FIG. 9

## FIG. 10

## FIG. 11

α   21   21a   22

## FIG. 12

## FIG. 13

25

23   24

# FIG. 14

D